(19) Europäisches Patentamt
European Patent Office
Office européen des brevets

(11) EP 0 761 762 B1

(12) EUROPEAN PATENT SPECIFICATION

(45) Date of publication and mention of the grant of the patent:
**14.10.1998 Bulletin 1998/42**

(51) Int Cl.[6]: **C08L 83/08**, C08K 9/06, C08K 5/54, G03G 15/16

(21) Application number: **96113140.6**

(22) Date of filing: **16.08.1996**

(54) **High resiliency fluorosilicone dispersion**

Hochelastische Fluorosilicondispersion

Dispersion de fluorosilicone à haute résilience

(84) Designated Contracting States:
**DE FR GB**

(30) Priority: **01.09.1995 US 522892**

(43) Date of publication of application:
**12.03.1997 Bulletin 1997/11**

(73) Proprietor: **DOW CORNING CORPORATION**
**Midland Michigan 48686-0994 (US)**

(72) Inventors:
- **Irish, Paul Thomas**
  **Bay City, Michigan 48708 (US)**
- **Maxson, Myron Timothy**
  **Sanford, Michigan 48657 (US)**

(74) Representative: **Fleischer, Holm Herbert, Dr. et al**
**Patentanwälte Sternagel & Fleischer**
**Braunsberger Feld 29**
**51429 Bergisch Gladbach (DE)**

(56) References cited:
**EP-A- 0 337 790**
**EP-A- 0 374 951**
**EP-A- 0 449 747**
**US-A- 5 039 736**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 761 762 B1

## Description

This invention relates to a fluorosilicone dispersion having an in situ treated filler, said dispersion curing upon exposure to moisture to an elastomer with improved resiliency and low hysteresis loss. This invention also relates to a photocopy machine transfer roll that is coated with said high resiliency elastomer. This invention also relates to a photocopy machine using said transfer roll.

Fluorosilicone dispersions which cure upon exposure to moisture are currently available but they lack sufficient resiliency and do not have sufficiently low values for hysteresis loss.

Japanese Patent Application (Kokai) 5-311078 describes a fluorosilicone rubber composition consisting of trifluoropropyl group-containing diorganopolysiloxane, silica treated with trifluoropropyl group-containing silane or siloxane, silanol-capped diorganosiloxane and curing agent.

U.S. Patent 4,529,774 claims a treatment for silica reinforcing fillers using a fluoroalkyl-functional diorganopolysiloxane treating agent. Such treating agents are especially compatible for use with fluorosilicone gums and fluorosilicone rubbers.

U.S. Patent 4,882,369 discloses a high strength fluorosilicone sealant containing an in situ treated reinforcing filler. This sealant is produced in a process which treats the reinforcing filler with di(trifluoropropyl) tetramethyldisilazane.

U.S. Patent 4,152,315 teaches the use of bis(polydiorganosiloxanyl)amine in conjunction with a silazane to treat finely divided silica and the subsequent use of such treated silica in curable silicone elastomer compositions. The bis (polydiorganosiloxanyl)amine is used to reduce the amount of silazane treating agent to produce a final product at a lower cost.

European Patent Publication 0565100 provides an intermediate recording medium for thermal transfer printing. This recording medium comprises a metallic drum and a thin silicone rubber which is overlaid on the metallic drum.

A high resiliency, low hysteresis loss value fluorosilicone elastomer is produced by a process in which a fluorosilicone dispersion, an untreated or partially pre-treated filler and a non-fluorosilicone-containing filler treating agent are blended. A solvent and a crosslinking agent are then added to yield a composition which is capable of curing to an elastomer having improved resiliency and low hysteresis loss.

This invention also relates to a photocopy machine transfer roll that is coated with said high resiliency, low hysteresis loss elastomer. This invention also relates to a photocopy machine using said transfer roll.

It is an object of this invention to provide a moisture curable fluorosilicone dispersion which is capable of being cured to a fluorosilicone elastomer which has improved resiliency and lower hysteresis loss values.

This invention relates to a moisture curable fluorosilicone dispersion produced by the method comprising the steps of (A) mixing: (i) from 30 to 100 parts by weight of a hydroxy-terminated polydiorganosiloxane selected from siloxanes having the unit formula

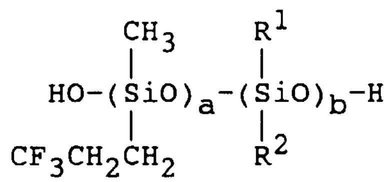

or siloxanes having the unit formula

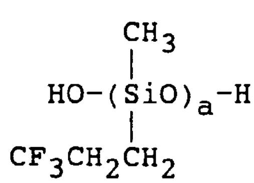

where $R^1$ and $R^2$ are individually selected from the group consisting of methyl, ethyl, propyl and butyl, a is an integer with a value of at least one, b is an integer greater than zero; (ii) from 3 to 18 parts by weight of a reinforcing silica filler having a surface area of 50 to 400 $m^2/g$, selected from untreated silica or partially pretreated silica; (iii) from 0.1 to 2 parts by weight of hexamethyldisilazane, (B) heating the mixture, (C) applying vacuum to the heated mixture for a sufficient time to remove volatiles, (D) cooling the heated mixture, (E) admixing from 10 to 100 parts by weight of a

solvent, and (F) admixing from 2 to 15 parts by weight of a crosslinking agent selected from ketoximo silanes of the general formula $(R^3)_cSi(R^4)_{4-c}$ where $R^3$ is a ketoximo group, each $R^4$ is independently selected from the group consisting of methyl, ethyl, vinyl or $Osi(R^5)_3$ , wherein $R^5$ is independently selected from methyl, ethyl, propyl, butyl, vinyl and phenyl, and c is an integer with a value of 2 to 4, inclusive, and mixtures thereof, to give a moisture curable fluorosilicone dispersion containing an in situ treated filler, which dispersion cures upon exposure to moisture and which yields, upon evaporation of the solvent, an elastomer having improved resiliency and lower hysteresis loss.

In a preferred embodiment, the crosslinking agent admixing step (F) is followed by (G) purging the resulting polymer and solvent containing mixture with dry nitrogen for a time sufficient to remove atmospheric moisture.

By fluorosilicone dispersion, it is meant a two phase system in which minute particles of filler are distributed more or less evenly throughout a fluorosilicone polymer. The fluorosilicone polymer molecules are in solution in a solvent.

The dispersion resulting from the method of this invention is based upon a hydroxy-terminated polydiorganosiloxane selected from siloxanes having the unit formula

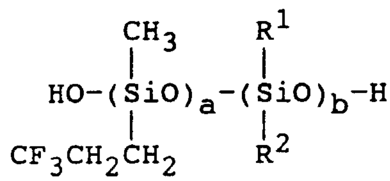

or siloxanes having the unit formula

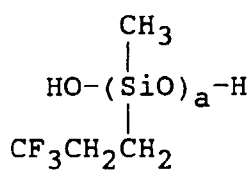

where $R^1$ and $R^2$ are individually selected from the group consisting of methyl, ethyl, propyl and butyl, a is an integer with a value of at least one, and b is an integer. The preferred $R^1$ and $R^2$ are methyl. The preferred polydiorganosiloxane is one in which b is selected such that the resulting polydiorganosiloxane contains no more than 5 mole percent of $R^1R^2(SiO)_bH$. The more preferred polydiorganosiloxane is one in which b is equal to zero. The most preferred polydiorganosiloxane is trifluoropropylmethylsiloxane with an average degree of polymerization (DP) of 100 to 200. Such preferred, more preferred and most preferred polydiorganosiloxanes are known to those skilled in the art, as is their method of manufacture.

The reinforcing silica filler used in our method can be any one of the commonly used untreated or partially pretreated fumed silicas employed as reinforcement in silicone rubbers. These silicas have a surface area of 50 to 400 $m^2/g$. The preferred silica has an average surface area of 200 to 400 $m^2/g$ and the most preferred silica has an average surface area of 300 to 400 $m^2/g$. The amount of filler is from 3 to 18 parts by weight, preferred is 4 to 10 and the most preferred is 6 to 8. If more filler is added, the resulting elastomers will have a higher tensile strength and less resiliency. If less silica is used, the resulting elastomer will have increased resiliency but poor mechanical properties.

The silica is added and mixed with the polydiorganosiloxane in small increments to insure that the silica particles are evenly dispersed throughout the polydiorganosiloxane. Typically the silica will be divided into 4 equal segments, each of which will be added and mixed to the polydiorganosiloxane sequentially.

The silica must be untreated or only partially pretreated. An untreated silica is one in which the reactive hydroxy sites on the surface of the silica have not been modified by exposure to treating agents. A partially pretreated silica is one in which some, but not all, of the reactive hydroxy sites have been modified by exposure to a treating agent.

The silica treatment of this invention is an in situ treatment with hexamethyldisilazane in the presence of the polydiorganosiloxane. The hexamethyldisilazane reacts readily with hydroxy groups at the surface of the silica to treat the silica. If the surface of the silica is not modified by either pretreatment or in situ treatment, then the silica will not be readily dispersible within the polydiorganosiloxane and the resultant silica containing polydiorganosiloxane will not be readily dispersible within the solvent. If fully pretreated silica is used rather than partially pretreated or untreated silica, the resulting elastomer will have a lower durometer and less resiliency and a higher hysteresis loss. The amount of hexamethyldisilazane needed to effectively treat the surface of the silica will range from 0.1 to 2 parts by weight depending on the amount of hydroxy groups present on the surface of the silica. The exact amount for a specific formulation will depend upon the amount and type of silica filler used and can be determined by one skilled in the art without undue experimentation. Hexamethyldisilazane is commercially available.

A small amount of water, not to exceed 2 parts by weight, may be added to the polydiorganosiloxane as a processing aid for the filler treating reaction. This water must be removed before the solvent is admixed.

The solvent used in this invention can be any highly polar solvent. Suitable solvents include acetone, tetrahydrofuran, methylisobutylketone and methylethylketone. Compositions that do not contain such a solvent will be sticky and difficult to work with on a mill. The solvent selected should be essentially free of free water. If a solvent containing more than 0.2% water is used in this invention, the resulting moisture curable fluorosilicone dispersion may exhibit shelf-stability problems. The amount of solvent will usually range from 10 to 100 parts by weight. The preferred amount of solvent is 25 to 75 parts by weight and the most preferred amount is 30 to 50 parts by weight. The preferred solvent is methylethylketone. Methylethylketone and other highly polar solvents are commercially available.

The crosslinking agent used in our method is selected from ketoximo silanes of the general formula $(R^3)_cSi(R^4)_{4-c}$ where $R^3$ is a ketoximo group, each $R^4$ is independently selected from the group consisting of methyl, ethyl, vinyl or $OSi(R^5)_3$, wherein $R^5$ is independently selected from methyl, ethyl, propyl, butyl, vinyl and phenyl, and c is an integer with a value of 2 to 4, inclusive, and mixtures thereof. The preferred crosslinking agent is vinyltris(methylethylketoxime) silane.

The composition of this invention is moisture curable. The term moisture curable is used to mean a composition that is stable in the absence of moisture and, in the presence of moisture, cures to a crosslinked elastomer.

The moisture curable fluorosilicone dispersion of this invention is unique in that, upon exposure to moisture, the composition cures to an elastomer that has high resiliency and low values of hysteresis loss. The resiliency of a cured elastomer is a measure of the tendency of the material, when subjected to strain or compression, to rapidly return to its original shape after the stress has been removed. The hysteresis loss of a cured elastomer is a measure of an elastomer's tendency to retain its resiliency after it has been repeatedly stressed. Elastomers with high hysteresis loss will lose their resistance to strain or deformation after being repeatedly stressed. Elastomers with low hysteresis loss retain their resistance to strain or deformation after repeatedly being stressed. The hysteresis loss value is determined using the formula

$$\%\ \text{Hysteresis Loss} = ((A_1 - A_2)/A_1)\ X\ 100\%$$

where $A_1$ is the area under the stress-strain curve generated on the first pull of an ASTM die C tensile bar and $A_2$ is the area under the stress-strain curve on the third pull of the same ASTM tensile bar.

Methods of making and using transfer rolls and photocopy machines are well known in the art. Information on the xerography process, the use of transfer rolls and the use of polymeric release layers are found in U.S. Patent 4,185,140. A method of making and using a transfer roll is similarly disclosed in European Patent Publication 0565100.

In the process of xerography, more commonly known as photocopying, a light image of an original to be copied is recorded in the form of a latent electrostatic image on a photosensitive member. The latent image is then rendered visible by the application of electroscopic marking particles. These particles are commonly referred to as toners. The visual toner image is either fixed directly upon the photosensitive member, transferred from the member to another support, such as a piece of paper, or transferred to an intermediate transfer roll with subsequent fixing onto another member.

The introduction of liquid toner systems in which the electrostatic sensitive particles are dispersed in a solvent have created problems in the conventional xerographic process. The solvents of these liquid systems can degrade the transfer roll coating and thereby decrease the copy quality produced and the operating life of the transfer roll. Although fluorosilicone elastomers are known to be resistant to solvents, conventional fluorosilicones lack the required combination of resiliency and mechanical properties to be effective as transfer roll coatings in photocopy machines employing liquid toners.

Photocopy machine transfer rolls coated with the high resiliency, low hysteresis loss elastomer claimed herein are resistant to the solvents used in liquid toner systems and result in improved copy quality and transfer roll life. Liquid toner photocopy machines employing transfer rolls coated with this elastomer produce higher quality copies and have decreased transfer roll replacement.

## Example

A base composition was prepared. First 46.7 parts of a hydroxy-terminated trifluoropropylmethylsiloxane was placed in a "BAKER PERKINS" mixer. "BAKER PERKINS" is a trademark of Baker Perkins, Inc of Philadelphia, PA. Next 0.46 part of water was added and the combination was mixed for 1 minute to distribute the water through the polymer. Then 0.71 part of hexamethyldisilazane was admixed for 3 minutes. Then 1.35 parts of amorphous silica were

mixed into the polymer. The silica admixing step was repeated 3 more times to give a total filler content of 6.4 parts. The composition was then mixed for 15 minutes Next, the composition was mixed for another 15 minutes while being heated to 160°C. The composition was mixed and heated to 160°C. for an additional 45 minutes while a vacuum was applied to the composition. The composition was then allowed to cool for 30 minutes to yield a reinforced fluorosilicone base.

Next, 54.3 parts of this base were combined with 39.5 parts of dry methylethylketone and mixed on a paint shaker for 15 minutes. The composition was then rolled for 8 hours. Twelve parts of vinyltris(methylethylketoxime)silane were then added. The resulting composition was purged with dry nitrogen and mixed on a paint shaker for 15 minutes.

Two comparative compositions were prepared in which the untreated silica and in situ filler treating agent were replaced with pre-treated silica. In the first comparative composition, 6.4 parts of amorphous silica were dispersed in toluene. Then, 0.46 part of water and 0.71 part of hexamethyldisilazane were added to the silica dispersion. The resulting composition was allowed to age for 3 hours at 23°C. The toluene and residual ammonia were then evaporated from the composition by air drying for 16 hours followed by heating for 3 hours at 150°C. The resulting composition was identified as Comparative Composition #1. In the second comparative composition, 0.46 part of water and 0.71 part of hexamethyldisilazane, and 6.4 parts of silica were combined and tumbled for 3 hours. Residual ammonia was removed from the composition by heating for 16 hours at 150°C. The resulting composition was identified as Comparative Composition #2.

The three compositions were cured and tested with the results shown in Table 1.

TABLE 1

| | IN SITU TREATED Composition | PRE-TREATED Comparative Composition #1 | PRE-TREATED Comparative Composition #2 |
|---|---|---|---|
| VISCOSITY (cs) [$mm^2/s$] | 500 | 200 | 1300 |
| TENSILE (psi) [MPa] | 355 [2.45] | 95 [0.66] | 289 [2.00] |
| ELONGATION (%) | 183 | 85 | 136 |
| MODULUS | | | |
| 50 % psi<br>[MPa]<br>100 % psi<br>[MPa] | 69<br>[0.48]<br>162<br>[1.12] | 71<br>[0.49]<br>---<br>[---] | 136<br>[0.94]<br>222<br>[1.53] |
| DURO-METER (Shore A) | 33 | 34 | 49 |
| BASHORE (%) | 43 | 36 | 45 |
| SPECIFIC GRAVITY (g/$cm^3$) | 1.327 | 1.323 | 1.307 |
| HYSTERSIS LOSS (%) 50 % Extension | 9.1 | 12.8 | 42.7 |

## Claims

**1.** A method of producing a moisture curable fluorosilicone dispersion, comprising the steps of:

(A) mixing

(i) from 30 to 100 parts by weight of hydroxy-terminated polydiorganosiloxane selected from siloxanes having the unit formula

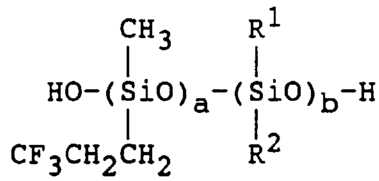

or siloxanes having the unit formula

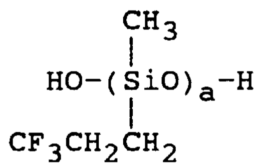

where $R^1$ and $R^2$ are individually selected from the group consisting of methyl, ethyl, propyl and butyl, a is an integer with a value of at least one, and b is an integer greater than zero;
(ii) from 3 to 18 parts by weight of a reinforcing filler having a surface area of 50 to 400 $m^2/g$, selected from untreated silica or partially pre-treated silica;
(iii) from 0.1 to 2 parts by weight of hexamethyldisilazane;

(B) heating the mixture;
(C) applying a vacuum to the heated mixture for a sufficient time to remove any volatiles;
(D) cooling the heated mixture;
(E) admixing from 10 to 100 parts by weight of a solvent; and
(F) admixing from 2 to 15 parts by weight of a crosslinking agent selected from ketoximo silanes of the general formula $(R^3)_cSi(R^4)_{4-c}$ where $R^3$ is a ketoximo group, each $R^4$ is independently selected from the group consisting of methyl, ethyl, vinyl or $OSi(R^5)_3$ , wherein $R^5$ is independently selected from methyl, ethyl, propyl, butyl, vinyl and phenyl, and c is an integer with a value of 2 to 4, inclusive and mixtures thereof.

**2.** The method of claim 1 further comprising the step of (G) purging the resulting polymer and solvent containing mixture with dry nitrogen for a time sufficient to remove atmospheric moisture.

**3.** The method of claim 2 wherein up to 2 parts by weight of water is added during the mixing step (A).

**4.** The method of claim 3 wherein said polydiorganosiloxane is trifluoropropylmethylsiloxane, said filler is untreated silica, said crosslinking agent is vinyltris(methylethylketoxime)silane and said solvent is methylethylketone.

**5.** The dispersion obtainable by the method of claims 1 - 4.

**6.** The elastomer obtainable by curing the dispersion of claim 5.

**7.** A transfer roll for a photocopy machine coated with the elastomer of claim 6.

**8.** A method of transferring an image using a transfer roll as claimed in claim 7.

**9.** A method of photocopying in a photocopy machine using a transfer roll as claimed in claim 7.

**10.** Use of the dispersion of claim 5 for the preparation of the transfer roll for the photocopy machine of claim 7 coated with the elastomer of claim 6.

**Patentansprüche**

**1.** Verfahren zur Herstellung einer durch Feuchtigkeit härtbaren Fluorsilicon-Dispersion, welches die Schritte umfaßt,

in denen man:

(A) mischt

(i) 30 bis 100 Gewichtsteile eines Polydiorganosiloxans mit endständigen Hydroxylgruppen, ausgewählt aus Siloxanen mit der Formel für die Einheit

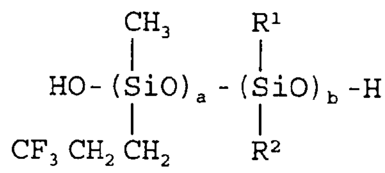

oder Siloxanen mit der Formel für die Einheit

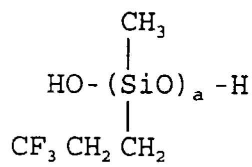

wobei $R^1$ und $R^2$ jeweils unabhängig ausgewählt sind aus der Gruppe, die aus Methyl, Ethyl, Propyl und Butyl besteht, a eine ganze Zahl mit einem Wert von mindestens 1 bedeutet und b eine ganze Zahl größer als 0 bezeichnet;
(ii) 3 bis 18 Gewichtsteile eines verstärkenden Füllstoffs mit einer Oberfläche von 50 bis 400 $m^2/g$, der ausgewählt ist aus unbehandeltem Siliciumdioxid oder teilweise vorbehandeltem Siliciumdioxid;
(iii) 0,1 bis 2 Gewichtsteile Hexamethyldisilazan;

(B) die Mischung erhitzt;
(C) an die erhitzte Mischung genügend lange ein Vakuum anlegt, um irgendwelche flüchtigen Stoffe zu entfernen;
(D ) die erhitzte Mischung abkühlt;
(E) 10 bis 100 Gewichtsteile eines Lösemittels zumischt; und
(F) 2 bis 15 Gewichtsteile eines Vernetzungsmittels zumischt, welches ausgewählt ist aus Ketoximosilanen der allgemeinen Formel $(R^3)_cSi(R^4)_{4-c}$, in der $R^3$ für eine Ketoximogruppe steht, $R^4$ jeweils unabhängig ausgewählt ist aus der Gruppe, die aus Methyl, Ethyl, Vinyl oder $OSi(R^5)_3$ besteht, wobei $R^5$ unabhängig ausgewählt ist aus Methyl, Ethyl, Propyl, Butyl, Vinyl und Phenyl, und c eine ganze Zahl mit einem Wert von 2 bis einschließlich 4 bedeutet, und aus Mischungen daraus.

**2.** Verfahren nach Anspruch 1, welches die weitere Stufe einschließt, in der man (G) die entstandene, Polymer und Lösemittel enthaltende Mischung während eines genügend langen Zeitraumes mit trockenem Stickstoff spült, um atmosphärische Feuchtigkeit zu entfernen.

**3.** Verfahren nach Anspruch 2, wobei während der Mischstufe (A) bis zu 2 Gewichtsteile Wasser zugesetzt werden.

**4.** Verfahren nach Anspruch 3, wobei das Polydiorganosiloxan Trifluorpropylmethylsiloxan ist, der Füllstoff unbehandeltes Siliciumdioxid ist, das Vernetzungsmittel Vinyl-tris-(methylethylketoxim)silan ist und das Lösemittel Methylethylketon ist.

**5.** Die Dispersion, erhältlich nach dem Verfahren der Ansprüche 1 bis 4.

**6.** Das Elastomer, erhältlich durch Härten der Dispersion des Anspruchs 5.

**7.** Eine Transferwalze für einen Photokopierapparat, die mit dem Elastomer des Anspruchs 6 beschichtet ist.

**8.** Verfahren zum Transferieren eines Bildes, bei dem man eine Transferwalze verwendet, wie sie in Anspruch 7 beansprucht ist.

**9.** Verfahren zum Photokopieren in einem Photokopierapparat, bei dem man eine Transferwalze verwendet, wie sie in Anspruch 7 beansprucht ist.

**10.** Verwendung der Dispersion des Anspruchs 5 für die Herstellung der Transferwalze für den Photokopierapparat des Anspruchs 7, die mit dem Elastomer des Anspruchs 6 beschichtet ist.

**Revendications**

**1.** Un procédé de production d'une dispersion de fluorosilicone durcissable par l'humidité, comprenant les étapes consistant à :

(A) mélanger

(i) 30 à 100 parties en poids d'un polydiorganosiloxane terminé par des groupes hydroxyle, choisi parmi les siloxanes ayant la formule de motifs

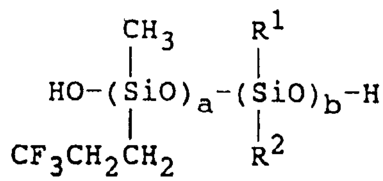

ou les siloxanes ayant la formule de motifs

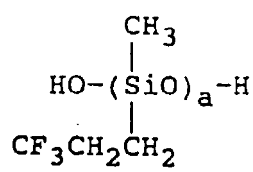

où $R^1$ et $R^2$ sont choisis individuellement dans la classe formée par les groupes méthyle, éthyle, propyle et butyle, a est un nombre entier ayant une valeur d'au moins 1 et b est un nombre entier supérieur à zéro ;
(ii) 3 à 18 parties en poids d'une charge de renforcement ayant une surface spécifique de 50 à 400 $m^2$/g, choisie parmi une silice non traitée ou une silice partiellement prétraitée ;
(iii) 0,1 à 2 parties en poids d'hexaméthyldisilazane ;

(B) chauffer le mélange ;
(C) appliquer un vide au mélange chauffé pendant un temps suffisant pour éliminer toutes matières volatiles ;
(D) refroidir le mélange chauffé ;
(E) ajouter et mélanger 10 à 100 parties en poids d'un solvant ; et
(F) ajouter et mélanger 2 à 15 parties en poids d'un agent de réticulation choisi parmi des cétoximosilanes de la formule générale $(R^3)_cSi(R^4)_{4-c}$ où $R^3$ est un groupe cétoximo, chaque $R^4$ est choisi indépendamment dans la classe formée des groupes méthyle, éthyle, vinyle ou $OSi(R^5)_3$, où $R^5$ est choisi indépendamment parmi les groupes méthyle, éthyle, propyle, butyle, vinyle et phényle, et c est un nombre entier ayant une valeur de 2 à 4 inclusivement, et leurs mélanges.

**2.** Le procédé de la revendication 1, comprenant de plus l'étape consistant à (G) purger le mélange résultant contenant le polymère et le solvant avec de l'azote anhydre pendant un temps suffisant pour éliminer l'humidité atmosphérique.

3. Le procédé de la revendication 2, dans lequel on ajoute jusqu'à 2 parties en poids d'eau pendant l'étape de mélange (A).

4. Le procédé de la revendication 3, dans lequel ledit polydiorganosiloxane est le trifluoropropylméthylsiloxane, ladite charge est une silice non traitée, ledit agent de réticulation est le vinyltris (méthyléthylcétoximo)-silane et ledit solvant est la méthyléthylcétone.

5. La dispersion pouvant être obtenue par le procédé des revendications 1 à 4.

6. L'élastomère pouvant être obtenu par durcissement de la dispersion de la revendication 5.

7. Un rouleau de transfert pour une machine à photocopier, revêtu de l'élastomère de la revendication 6.

8. Un procédé de transfert d'une image utilisant un rouleau de transfert tel que revendiqué dans la revendication 7.

9. Un procédé de formation de photocopie dans une machine à photocopier utilisant un rouleau de transfert tel que revendiqué dans la revendication 7.

10. Utilisation de la dispersion de la revendication 5 pour la fabrication du rouleau de transfert pour la machine à photocopier de la revendication 7 revêtu de l'élastomère de la revendication 6.